# EUROPÄISCHE PATENTSCHRIFT

(11) **EP 1 850 712 B1**
(45) Veröffentlichungstag und Bekanntmachung des Hinweises auf die Patenterteilung: **05.01.2011**
(21) Anmeldenummer: 06707922.8
(22) Anmeldetag: 31.01.2006
(51) Int. Cl.: A47J 27/21

(54) **ELEKTRISCHER WASSERKOCHER**
ELECTRIC KETTLE
BOUILLOIRE ELECTRIQUE

(30) Priorität: 11.02.2005 DE 102005006352
(43) Veröffentlichungstag der Anmeldung: 07.11.2007
(73) Patentinhaber: BSH Bosch und Siemens Hausgeräte GmbH, 81739 München (DE)
(72) Erfinder: HUBER, Michael, A-6341 Ebbs (AT); KRAMER, Siegmund, 83417 Kirchanschöring (DE); MATHES, Anton, 83364 Neukirchen (DE)
(74) Vertreter: Dosterschill, Peter
(86) Internationale Anmeldenummer: PCT/EP2006/050553
(87) Internationale Veröffentlichungsnummer: WO 2006/084804

(56) Entgegenhaltungen:
- DE-A1- 19 623 617
- GB-A- 1 443 847
- GB-A- 2 397 214

## Beschreibung

Die Erfindung betrifft einen Wasserkocher.

Bekannt sind kleine Haushaltsgeräte, wie z.B. Standmixer und insbesondere Wasserkocher, die einen Lebensmittelbehälter, im Falle des Wasserkochers einen Wasserbehälter, umfassen, der von einem rohrförmigen Mantel beispielsweise aus Aluminium oder Edelstahl umgeben ist.

Die bekannten kleinen Haushaltgeräte werden montiert, indem deren Lebensmittelbehälter von oben in die rohrförmigen Mäntel geschoben und anschließend an den Mänteln befestigt werden. Diese Art der Montage ist äußerst einfach und schnell und daher sehr kostengünstig. Damit jedoch das kleine Haushaltsgerät auf diese einfache und schnelle und daher kostengünstige Art zusammengebaut werden kann, muss die obere Öffnung des Mantels genügend groß sein, damit der Lebensmittelbehälter durch diese obere Öffnung passt. Die GB 2 379 214 A offenbart einen elektrischen Wasserkocher mit einem Wasserbehälter und mit einem den Wasserbehälter umhüllenden zylinderförmigen Mantel, wobei der Mantel in seinem oberen Bereich konisch aus-gebildet ist.

Die Aufgabe der Erfindung ist es daher, einen elektrischen Wasserkocher mit einer flexibleren Formgestaltung bereitzustellen, wobei der Wasserbehälter aus Kunststoff gefertigt ist.

Die Aufgabe der Erfindung wird gelöst durch einen elektrischen Wasserkocher mit einem Wasserbehälter, der einen Boden und eine Öffnung, über die der Wasserbehälter mit Wasser befüllbar ist, umfasst, und mit einem den Wasserbehälter umhüllenden zylinderförmigen Mantel, der eine obere Öffnung umfasst, wobei der Mantel in seinem oberen Bereich konisch ausgebildet, die Querschnittsfläche der oberen Öffnung des Mantels kleiner als die Querschnittsfläche des Bodens des Wasserbehälter und der Mantel in seinem oberen konischen Bereich fest an dem oberen Bereich des Wasserbehälters gelagert ist, der dadurch gekennzeichnet ist, dass der Wasserbehälter (3) an seinem unteren Bereich (3f) gegenüber dem Mantel (2) bezüglich der Längsachse des Wasserbehälters (3) mit wenigstens einem Federelement (11) verschieblich gelagert ist. Durch die konische Ausgestaltung des Mantels kann der Wasserbehälter relativ gut an dem Mantel fest gelagert werden, indem er z.B. mit wenigstens einem weiteren Bauteil in diesem Bereich des Mantels befestigt ist. Die feste Lagerung ist insbesondere dann gut, wenn der Mantel mit dem Wasserbehälter mittels dem weiteren Bauteil verspreizt oder verkeilt ist.

Umfasst der elektrische Wasserkocher eine an dem Wasserbehälter angeformte Schnaupe zum Ausgießen von Wasser und der Mantel in seinem konischen Bereich eine der Schnaupe entsprechenden Aussparung, so kann der Wasserbehälter insbesondere mit einer der Aussparung angepassten Schnaupenblende am Mantel fest gelagert werden.

Vorteilhaft ist es auch, wenn der elektrische Wasserkocher einen Griff umfasst, der mit dem Wasserbehälter verrastet ist. Bei der Montage des Wasserkochers kann somit zunächst der Mantel über den Wasserbehälter gestülpt und anschließend der Griff mit dem Wasserbehälter verrastet werden. Der Mantel ist dann besonders gut am Wasserbehälter fest gelagert, wenn der Mantel in seinem konischen Bereich eine dem Griff entsprechende Aussparung aufweist und der Griff nach der Verrastung mit dem Wasserbehälter gegen den Rand der für den Griff vorgesehenen Aussparung des Mantels drückt.

Eine weitere vorteilhafte Ausgestaltung des erfindungsgemäßen Wasserkochers ergibt sich, wenn das wenigstens eine Bauteil, mit dem der Wasserbehälter am konischen Bereich des Mantels fest gelagert ist, eine Blende ist, die einen Spalt, der von dem Rand der oberen Öffnung des Wasserbehälters und dem Rand der oberen Öffnung des Mantels begrenzt wird, abdeckt. Die Blende ist also nicht nur für eine gute Befestigung des Mantels an dem Wasserbehälter vorgesehen, sondern deckt auch besagten Spalt ab, was dem Erscheinungsbild des Wasserkochers zugute kommt.

Wenn der Wasserbehälter aus Kunststoff gefertigt ist, kann das mit dem Wasserkocher erhitzte Wasser den Wasserbehälter ausdehnen, wodurch sich der Wasserbehälter gegenüber dem Mantel leicht verschieben kann. Daher ist vorgesehen, dass der Wasserbehälter an seinem unteren gegenüber dem Mantel bezüglich der Längsachse des Wasserbehälters mit wenigstens einem Federelement verschieblich gelagert ist. Das Federelement ist vorzugsweise vorgespannt, dass es den unteren Bereich des Wasserbehälters und den unteren Bereich des Mantels gegeneinander zieht. Durch die verschiebliche Lagerung kann sich der Wasserbehälter innerhalb des Mantels ausdehnen, ohne dass dies von außen sichtbar ist.

Ein Ausführungsbeispiel eines erfindungsgemäßen Wasserkochers und dessen Montage wird exemplarisch anhand der folgenden schematischen Figuren erläutert. Es zeigen:
- Figuren 1 bis 9: einen Wasserkocher in unterschiedlichen Stadien seiner Montage und
- Figur 10: eine Seitenansicht des Wasserkoches in geschnittener Darstellung.

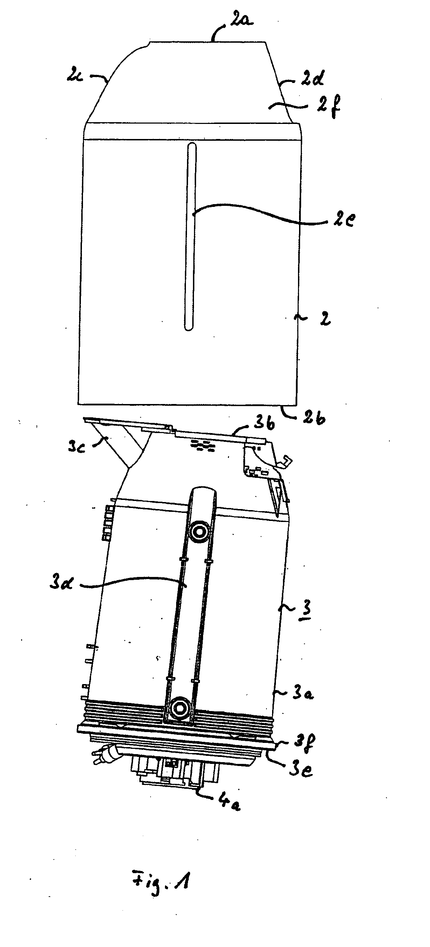

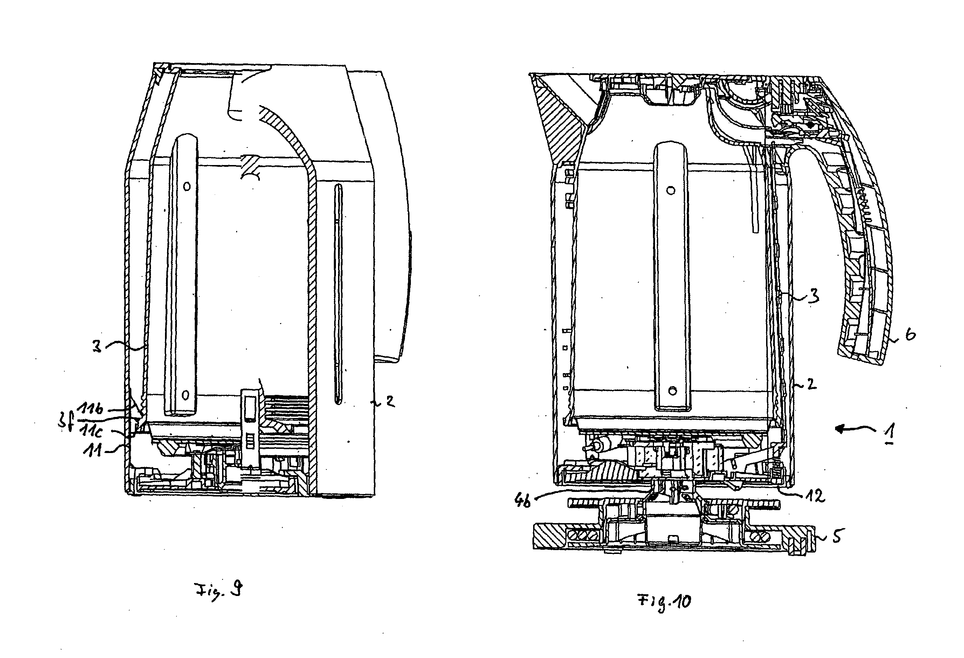

Die Figuren 1 bis 10 zeigen einen erfindungsgemäßen Wasserkocher 1. Mit den Figuren 1 bis 9 wird die Montage des Wasserkochers 1 verdeutlicht und die Figur 10 zeigt den fertig montierten Wasserkocher 1 in geschnittener Darstellung.

Im Falle des vorliegenden Ausführungsbeispiels umfasst der Wasserkocher 1 einen zylinderförmigen und im oberen Bereich konisch ausgebildeten Mantel 2 aus gebürstetem Aluminium und einen Wasserbehälter 3 aus Kunststoff. Der Wasserbehälter 3 umfasst einen im Wesentlichen zylinderförmigen Hohlkörper 3a aus Kunststoff mit einer oberen Öffnung 3b, über die der fertig montierte Wasserkocher 1 mit Wasser befüllt werden kann. Der Hohlkörper 3a umfasst ferner eine an den Hohlkörper 3a angeformte Schnaupe 3c zum Ausgießen von Wasser und es ist an dem Hohlkörper 3a eine Wasserstandsanzeige 3d angeordnet. An seinem unteren Ende ist der Hohlkörper 3a mit einer zur Erwärmung des Wassers vorgesehenen kreisförmigen flächenhaften Heizung 3e abgeschlossen. Die Heizung 3e, die somit den Boden des Wasserbehälters 3 bildet, wird im Falle des vorliegenden Ausführungsbeispiels im Betrieb mittels einer allgemein bekannten Steckkupplung und einem Sockel 5 mit elektrischer Energie versorgt. Die Steckkupplung umfasst zwei gegenseitig kontaktierbare Teilkupplungen 4a und 4b, von denen die Teilkupplung 4a an der Heizung 3e und die Teilkupplung 4b in dem Sockel 5 befestigt ist. Im Falle des vorliegenden Ausführungsbeispiels handelt es sich also um einen kabellosen Wasserkocher 1.

Der Mantel 2 umfasst eine obere Öffnungen 2a und eine kreisförmige untere Öffnung 2b. Die obere Öffnung 2a ist zumindest teilweise kreisförmig und umfasst an die Schnaupe 3b und einen Griff 6 angepasste Aussparungen 2c und 2d, sowie eine an die Wasserstandsanzeige 3d angepasste Aussparung 2e. Des Weiteren läuft der Mantel 2 in einem oberen Abschnitt 2f derart stark konisch zu, dass der Querschnitt der oberen Öffnung 2a deutlich kleiner als die Fläche der Heizung 3e ist. Die obere Öffnung 2a des Mantels 2 ist also deutlich kleiner als der Boden des Wasserbehälters 3.

Für die Montage des Wasserkochers 1 wird zunächst der Wasserbehälter 3 von unten in den Mantel 2 geschoben oder der Mantel 2 über den Wasserbehälter 3 gestülpt, so dass die Schnaupe 3c des Wasserbehälters 3 sich oberhalb der oberen Öffnung 2a des Mantels 2 befindet.

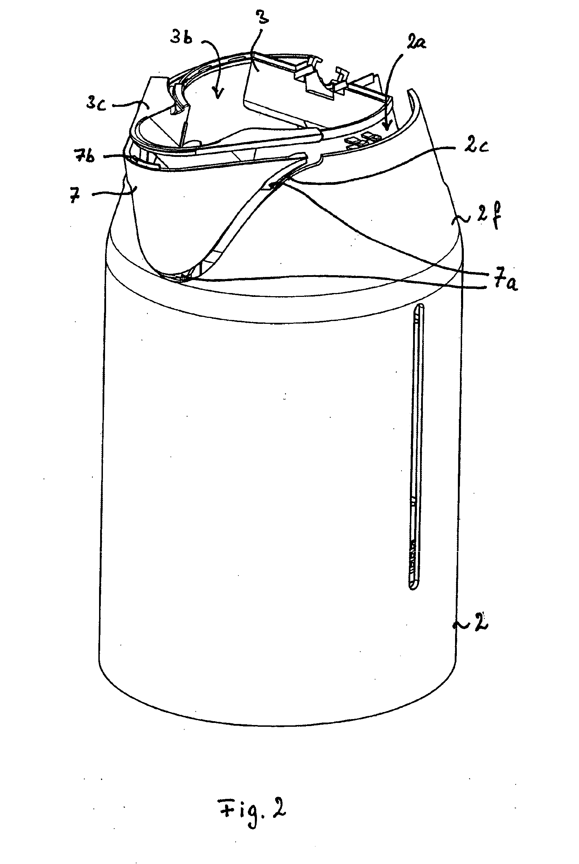

Anschließend wird im Bereich der Schnaupe 3c der Wasserbehälter 3 mit einem an die Schnaupe 3c und der Aussparung 2c der oberen Öffnung 2a des Mantels 2 angepassten Schnaupenblende 7 aus Kunststoff fixiert, wie dies in der Fig. 2 dargestellt ist. Die Schnaupenblende 7 umfasst an die Schnaupenblende 7 angeformte Rastzungen 7a, die den Mantel 2 an dessen Innenseite im Bereich der Aussparung 2c hintergreifen und die derart ausgeführt sind, dass im montiertem Zustand des Wasserkochers 1 die Außenflächen der Schnaupenblende 7 und des Mantels 2 möglichst spaltfrei und bündig abschließen. Die Schnaupenblende 7 umfasst ferner ein an die Schnaupenblende 7 angeformtes Rastelement 7b, das im montiertem Zustand des Wasserkochers 1 in ein an der Schnaupe 3c des Wasserbehälters 4 angeformtes Gegenrastelement eingerastet ist.

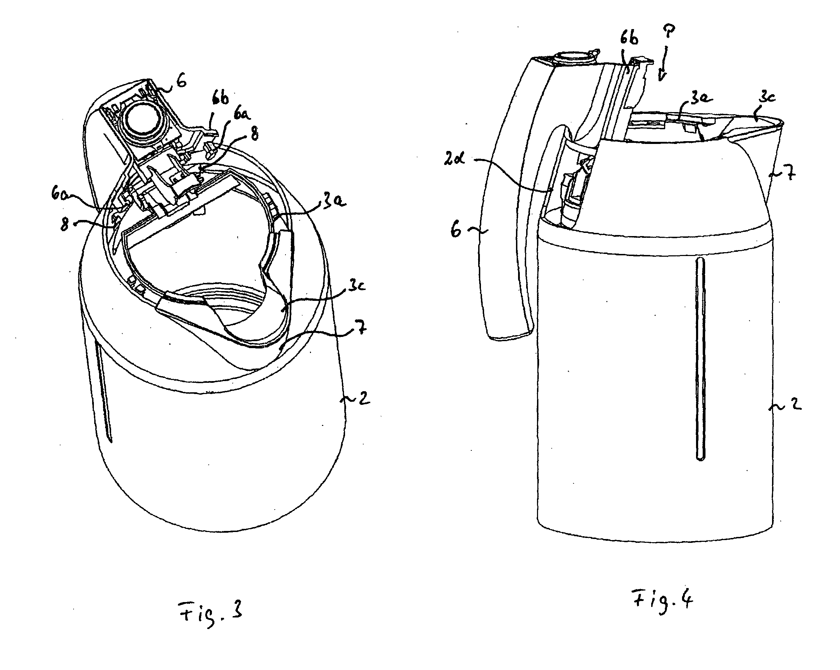

Anschließend wird der Griff 6 montiert, was in den Figuren 3 und 4 gezeigt ist. Wie es in der Fig. 3 zu sehen ist, umfasst der Hohlkörper 3a des Wasserbehälters 3 im oberen Bereich gegenüber der Schnaupe 3c zwei an den Hohlkörper 3a angeformte Kerben 8. Der Griff 6, der aus Kunststoff gefertigt ist, umfasst den Kerben 8 des Hohlkörpers 3a entsprechende und an den Griff 6 angeformte Führungsschienen 6a. Für die Montage des Griffs 6 werden die Führungsschienen 6a des Griffs 6 von oben in Richtung des Pfeils P (vgl. Fig. 4) in die Kerben 8 des Hohlkörpers 8 geschoben, bis der Griff 6 und der Hohlkörper 3a in einer vorgegebenen Stellung miteinender verrasten. Der Griff 6 ist somit mit dem Hohlkörper 3a des Wasserbehälters 3 fest verbunden.

Der Griff 6 umfasst ferner eine an den Griff 6 angeformte Aussparung 6b, die im Bereich der Aussparung 2d des Mantels 2 diesen im zusammengebautem Zustand des Wasserkochers 1 hintergreift. Die Aussparung 6b des Griffs 6 ist ferner derart ausgebildet, dass der Griff 6 und der Mantel 2 möglichst spaltfrei und bündig abschließen. Außerdem drückt der Hohlkörper 3a den Griff 6 im Bereich seiner Aussparung 6b im montiertem Zustand des Wasserkochers 1 gegen den Mantel 2, wodurch der Wasserbehälter 3 über den Griff 6 mit dem Mantel 2 verspannt ist.

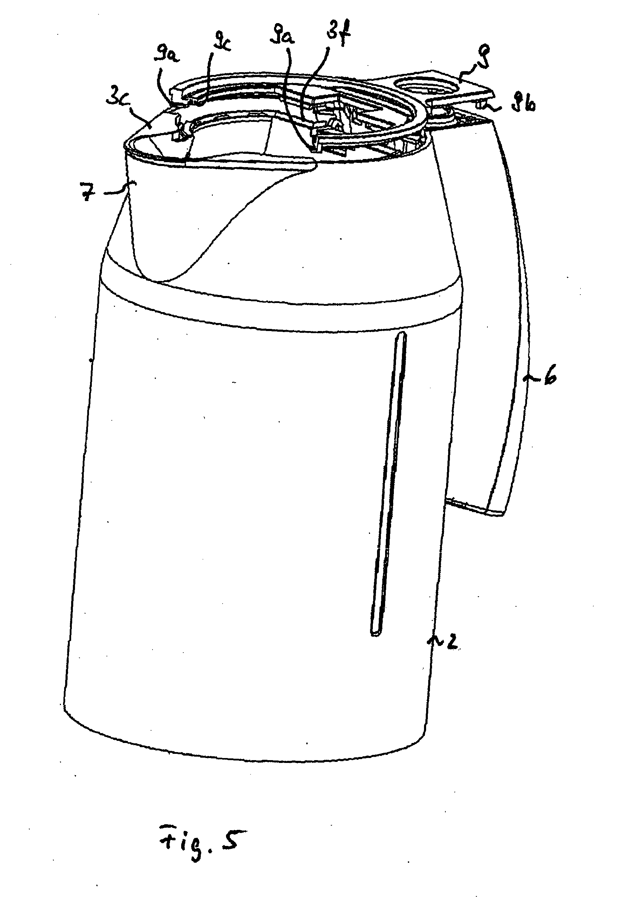

Um den Mantel 2 verbessert an dessen oberem Bereich mit dem Wasserbehälter 3 fest zu lagern, wird im Falle des vorliegenden Ausführungsbeispiels anschließend ein in der Fig. 5 näher dargestellte teilringförmige Blende 9 aus Kunststoff zwischen der oberen Öffnung 2a des Mantels 2 und der oberen Öffnung 3b des Hohlkörpers 3a des Wasserbehälters 3 gedrückt. Die Blende 9 umfasst angeformte Rastelemente 9a, die unterhalb der Schnaupe 3c des Wasserbehälters 3 eingreifen und angeformte Rastelemente 9b, die mit dem Griff 6 verrasten. Die Blende 9 umfasst ferner eine Nut 9c, die mit der die obere Öffnung 3b des Wasserbehälters 3 abschließenden Kante 3f im montiertem Zustand des Wasserkochers 1 verrastet. Dadurch ist die Blende 9 an dem Wasserbehälter 3 befestigt.

Die Blende 9 ist ferner derart ausgeführt, dass sie im zusammengebautem Zustand des Wasserkochers 1 von innen gegen den Rand der oberen Öffnung 2a des Mantels 2 drückt, wodurch der Mantel 2 und der Wasserbehälter 3 in ihren oberen Bereichen miteinander verspannt sind und daher der Wasserbehälter 3 am Mantel 2 im oberen Bereich befestigt ist. Außerdem ist die Blende 9 derart ausgebildet, dass sie den Spalt zwischen der Kante 3f der oberen Öffnung 3a des Wasserbehälters 3 und dem Rand der oberen Öffnung 2a des Mantels 2 abdeckt.

Im Falle des vorliegenden Ausführungsbeispiels wird anschließend der Mantel 2 in seinem unteren Bereich über einen aus Kunststoff gefertigten Ring 10 und vier aus Blech gefertigte T-förmige Blattfedern 11 im unteren Bereich des Wasserbehälters 3 verspannt. Jede der vier Blattfedern 11 umfasst einen Federbügel 11a, eine Federzunge 11b und eine Anschlagfläche 11 c.

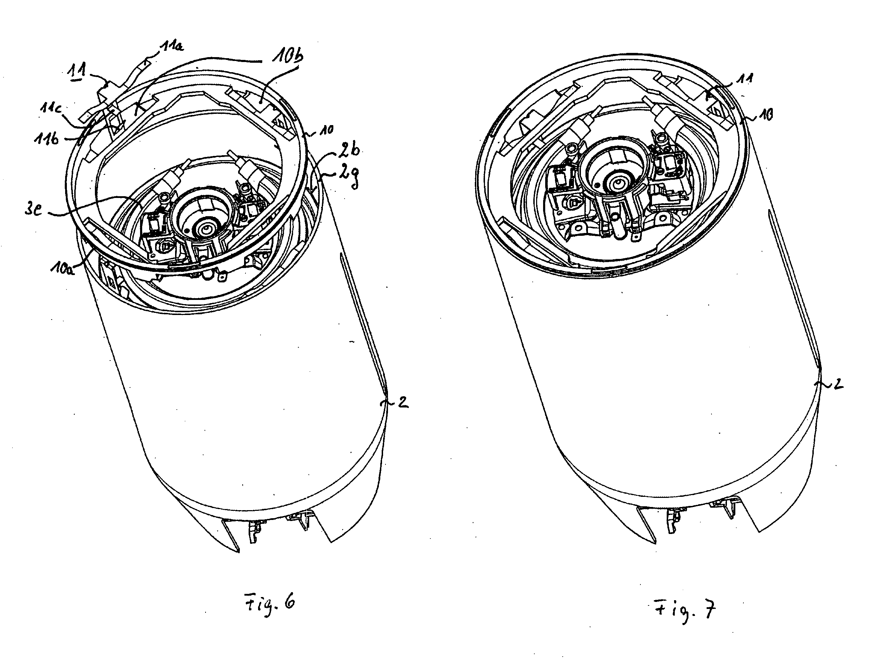

Für diesen Teil der Montage des Wasserkochers 1, der in den Figuren 6 und 7 verdeutlicht ist, wird zunächst der Ring 10 auf den Rand 2g der unteren Öffnung 2b des Mantels 2 gelegt. Der Ring 10 hat eine umlaufende Kante 10a, mit der sich der Ring 10 auf dem Rand 2g abstützt. Der Ring 10 umfasst außerdem vier Aussparungen 10b, durch die anschließend jeweils eine der Blattfeder 11 geführt wird. Die einzelnen Blattfedern 11 werden derart durch die Aussparungen 10b geführt, dass sich die Federbügel 11a am Ring 10 abstützen. Die einzelnen Blattfedern 11 werden so weit entlang der Innenfläche des Mantels 2 geschoben, bis die Federzungen 11 b über einen, an dem Hohlkörper 3a angeformten, in den Figuren 3 und 9 dargestellten Ring 3f geschoben werden und hinter dem Ring 3f verschnappen. Die Anschlagflächen 11c verhindern, dass die Blattfedern 11 zu weit in den entlang der Innenfläche des Mantels 2 geschoben werden. Die Blattfedern 11 sind ferner derart dimensioniert, dass die Federbügel 11 b beim montiertem Wasserkocher 1 vorgespannt sind. Dadurch wird der Ring 10 und der Wasserbehälter 3 aneinander gedrückt. Da der Ring 10 wiederum auf dem Rand 2g des Mantels 2 aufliegt, wird der untere Bereich des Wasserbehälters 3 gegen den Rand 2g der unteren Öffnung 2b des Mantels 2 gezogen.

Dehnt sich nun im Betrieb des Wasserkochers 1 der Hohlkörper 3a des Wasserbehälters 3 aufgrund des erwärmten Wassers aus, so kann sich der Hohlkörper 3a nur längs seiner Längsachse nach unten ausdehnen, da der Wasserbehälter 3 am oberen Ende am Mantel 2 fest und am unteren Ende mittels der Blattfedern 11 verschieblich gelagert ist. Da zudem der Wasserbehälter 3 mittels der Blattfedern 11 im untern Bereich mit dem Mantel 2 verspannt ist, ergibt sich außerdem eine relativ gute Befestigung des Mantels 2 am Wasserbehälter 3, obwohl sich der Hohlkörper 3a des Wasserbehälters 3 aufgrund der Erwärmung nach unten ausdehnt. Ferner ist im Falle des vorliegenden Ausführungsbeispiels der Mantel 2 derart weit nach unten gezogen, dass er unabhängig von der durch die Erwärmung des Wassers bedingten Ausdehnung den Wasserbehälter 3 überdeckt.

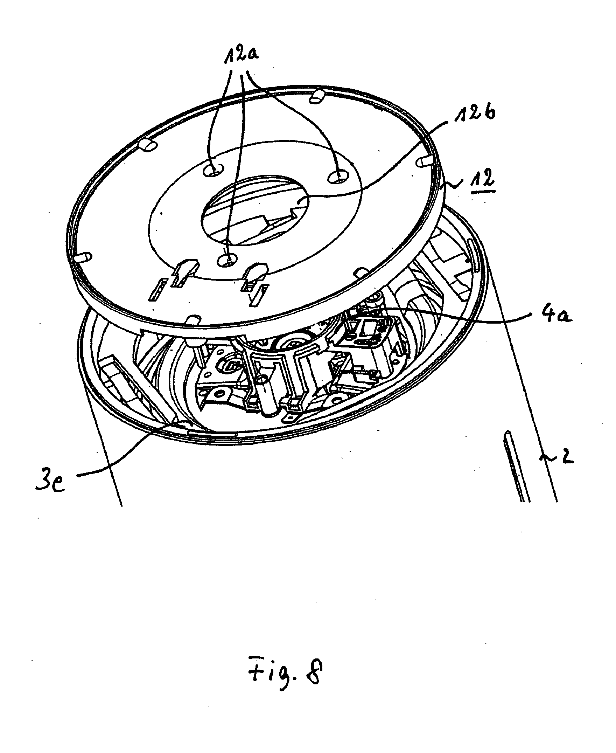

Um die untere Öffnung 2b des Mantels 2 zu verschließen, wird, wie in der Fig. 8 dargestellt, anschließend die Öffnung mit einer kreisförmigen Blende 12 aus Kunststoff abgedeckt. Die kreisförmige Blende 12 wird mit drei in der Fig. 8 nicht dargestellten Schrauben mit der Heizung 3e verbundenen Teilkupplung 4a verschraubt. Die für die Schrauben vorgesehenen Löcher sind mit dem Bezugszeichen 12a versehen. Wie es der Fig. 8 zu entnehmen ist, umfasst die kreisförmige Blende 12 eine runde Öffnung 12b, durch die die mit der Heizung 3e verbundene Teilkupplung 4a kontaktierbar ist.

Im Betrieb des fertig montierten Wasserkochers 1 sitzt der Wasserbehälter 3 mit montiertem Mantel 2 mit der kreisförmigen Blende 12 auf dem Sockel 5 und die Teilkupplung 4a kontaktiert die Teilkupplung 4b elektrisch, so dass die Heizung 3e des Wasserkochers 1 im Betrieb über die Steckkupplung mit elektrischer Energie versorgt wird. In der Fig. 9 ist der Wasserbehälter 3 mit montiertem Mantel 2 leicht abgesetzt zum Sockel 5 dargestellt. Die kreisförmige Blende 12 ist über die Teilkupplung 4a direkt mit dem Wasserbehälter 3 des Wasserkochers 1 verbunden. Folglich sitzt im Betrieb des Wasserkochers 1 nicht der Mantel 2, sondern der Wasserbehälter 3 über die Teilkupplung 4a und der kreisförmigen Blende 12 auf dem Sockel 5.

## Patentansprüche

1. Elektrischer Wasserkocher mit einem Wasserbehälter (3), der einen Boden (3e) und eine Öffnung (3b), über die der Wasserbehälter (3) mit Wasser befüllbar ist, umfasst, und mit einem den Wasserbehälter (3) umhüllenden zylinderförmigen Mantel (2), der eine obere Öffnung (2a) umfasst, wobei der Mantel (2) in seinem oberen Bereich (2f) konisch ausgebildet, die Querschnittsfläche der oberen Öffnung (2a) des Mantels (2) kleiner als die Querschnittsfläche des Bodens (3e) des Wasserbehälters (3) und der Mantel (2) in seinem oberen konischen Bereich (2f) fest an dem oberen Bereich des Wasserbehälters (3) gelagert ist, **dadurch gekennzeichnet, dass** der Wasserbehälter (3) an seinem unteren Bereich (3f) gegenüber dem Mantel (2) bezüglich der Längsachse des Wasserbehälters (3) mit wenigstens einem Federelement (11) verschieblich gelagert ist.

2. Elektrischer Wasserkocher nach Anspruch 1, **dadurch gekennzeichnet, dass** der Wasserbehälter (3) mit wenigstens einem weiteren Bauteil (6, 7, 9) an dem konischen Bereich (2f) des Mantels (2) gelagert ist.

3. Elektrischer Wasserkocher nach Anspruch 2, **dadurch gekennzeichnet, dass** an dem Wasserbehälter (3) eine Schnaupe (3c) zum Ausgießen von Wasser angeformt ist und der Mantel (2) in seinem konischen Bereich (2f) eine der Schnaupe (2c) entsprechenden Aussparung (2c) aufweist.

4. Elektrischer Wasserkocher nach Anspruch 3, **dadurch gekennzeichnet, dass** das wenigstens eine Bauteil, mit dem der Wasserbehälter (3) in seinem oberen Bereich am oberen Bereich (2f) des Mantels (2) fest gelagert ist, eine Schnaupenblende (7) ist.

5. Elektrischer Wasserkocher nach einem der Ansprüche 1 bis 4, **dadurch gekennzeichnet, dass** der Wasserkocher (1) einen Griff (6) umfasst, der mit dem Wasserbehälter (3) verrastet ist.

6. Elektrischer Wasserkocher nach Anspruch 5, **dadurch gekennzeichnet, dass** der Mantel (2) in seinem konischen Bereich (2f) eine dem Griff (6) entsprechende Aussparung (2d) aufweist.

7. Elektrischer Wasserkocher nach Anspruch 6, **dadurch gekennzeichnet, dass** der Griff (6) gegen den Rand der für den Griff (6) vorgesehenen Aussparung (2d) des Mantels (2) drückt.

8. Elektrischer Wasserkocher nach einem der Ansprüche 2 bis 7, **dadurch gekennzeichnet, dass** das wenigstens eine Bauteil, mit dem der Wasserbehälter (3) am konischen Bereich (2f) des Mantels (2) fest gelagert ist, eine Blende (9) ist, die einen Spalt, der von dem Rand (3f) der oberen Öffnung (3b) des Wasserbehälters (3) und dem Rand der oberen Öffnung (2a) des Mantels (2) begrenzt wird, abdeckt.

9. Elektrischer Wasserkocher nach einem der Ansprüche 1 bis 8, **dadurch gekennzeichnet, dass** das wenigstens eine Federelement (11) derart vorgespannt ist, dass es den unteren Bereich (3f) des Wasserbehälters (3) und den unteren Bereich (2g) des Mantels (2) gegeneinander zieht.

## Claims

1. Electric kettle with a water container (3), which comprises a base (3e) and an opening (3b) by way of which the water container (3) is fillable with water, and with a cylindrical casing (2), which encases the water container (3) and which has an upper opening (2a) wherein the casing (2) is of conical construction (2f) in its upper region, the cross-sectional area of the upper opening (2a) of the casing (2) is smaller than the cross-sectional area of the base (3e) of the water container (3) and the casing (2) in its upper conical region (2f) is fixedly mounted on the upper region of the water container (3), **characterised in that** the water container (3) at its lower region (3f) is mounted by at least one spring element (11) to be displaceable relative to the casing (2) with respect to the longitudinal axis of the water container (3).

2. Electric kettle according to claim 1, **characterised in that** the water container (3) is mounted by at least one further component (6, 7, 9) on the conical region (2f) of the casing (2).

3. Electric kettle according to claim 2, **characterised in that** a spout (3c) for pouring out water is formed at the water container (3) and the casing (2) has in its conical region (2f) a cut-out (2c) corresponding with the spout (2c).

4. Electric kettle according to claim 3, **characterised in that** the at least one component by which the water container (3) is fixedly mounted in its upper region on the upper region (2f) of the casing (2) is a spout skirt (7).

5. Electric kettle according to any one of claims 1 to 4, **characterised in that** the kettle (1) comprises a handle (6) detented with the water container (3).

6. Electric kettle according to claim 5, **characterised in that** the casing (2) has in its conical region (2f) a cut-out (2d) corresponding with the handle (6).

7. Electric kettle according to claim 6, **characterised in that** the handle (6) is pressed against the edge of the cut-out (2d), which is provided for the handle (6), of the casing (2).

8. Electric kettle according to any one of claims 2 to 7, **characterised in that** the at least one component by which the water container (3) is fixedly mounted on the conical region (2f) of the casing (2) is a skirt (9) covering a gap which is bounded by the edge (3f) of the upper opening (3b) of the water container (3) and the edge of the upper opening (2a) of the casing (2).

9. Electric kettle according to any one of claims 1 to 8, **characterised in that** the at least one spring element (11) is biased in such a manner that it draws the lower region (3f) of the water container (3) and the lower region (2g) of the casing (2) against one another.

## Revendications

1. Bouilloire électrique comprenant un réservoir à eau (3) qui comprend un fond (3e) et une ouverture (3b) par l'intermédiaire de laquelle le réservoir à eau (3) peut être rempli d'eau, et comprenant une enveloppe (2) cylindrique entourant le réservoir à eau (3), laquelle comprend une ouverture supérieure (2a), l'enveloppe (2) étant réalisée de manière conique dans sa partie supérieure (2f), la surface de la section transversale de l'ouverture supérieure (2a) de l'enveloppe (2) étant inférieure à la surface de la section transversale du fond (3e) du réservoir à eau (3) et l'enveloppe (2), dans sa partie supérieure conique (2f), étant logée de manière fixe sur la partie supérieure du réservoir à eau (3), **caractérisée en ce que** le réservoir à eau (3), sur sa partie inférieure (3f), est logé de manière déplaçable à l'aide d'au moins un élément à ressort (11), par rapport à l'enveloppe (2), relativement à l'axe longitudinal du réservoir à eau (3).

2. Bouilloire électrique selon la revendication 1, **caractérisée en ce que** le réservoir à eau (3) est logé sur la partie conique (2f) de l'enveloppe (2) à l'aide d'au moins un élément supplémentaire (6, 7, 9).

3. Bouilloire électrique selon la revendication 2, **caractérisée en ce qu'**un bec (3c) destiné à verser de l'eau est formé sur le réservoir à eau (3) et **en ce que** l'enveloppe (2) présente sur sa partie conique (2f) un évidement (2c) correspondant au bec (2c).

4. Bouilloire électrique selon la revendication 3, **caractérisée en ce que** l'au moins un élément, au moyen duquel le réservoir à eau (3), dans sa partie supérieure, est logé de manière fixe sur la partie supérieure (2f) de l'enveloppe (2), est une visière de bec (7).

5. Bouilloire électrique selon l'une quelconque des revendications 1 à 4, **caractérisée en ce que** la bouilloire électrique (1) comprend une poignée (6) qui est enclenchée avec le réservoir à eau (3).

6. Bouilloire électrique selon la revendication 5, **caractérisée en ce que** l'enveloppe (2) présente dans sa partie conique (2f) un évidement (2d) correspondant à la poignée (6).

7. Bouilloire électrique selon la revendication 6, **caractérisée en ce que** la poignée (6) appuie contre le bord de l'évidement (2d), ménagé pour la poignée (6), de l'enveloppe (2).

8. Bouilloire électrique selon l'une quelconque des revendications 2 à 7, **caractérisée en ce que** l'au moins un élément, au moyen duquel le réservoir à eau (3) est logé de manière fixe sur la partie conique (2f) de l'enveloppe (2), est une visière (9) qui recouvre une fente limitée par le bord (3f) de l'ouverture supérieure (3b) du réservoir à eau (3) et par le bord de l'ouverture supérieure (2a) de l'enveloppe (2).

9. Bouilloire électrique selon l'une quelconque des revendications 1 à 8, **caractérisée en ce que** l'au moins un élément à ressort (11) est précontraint de manière à ce qu'il tire l'une contre l'autre la partie inférieure (3f) du réservoir à eau (3) et la partie inférieure (2g) de l'enveloppe (2).
